# EUROPEAN PATENT APPLICATION

(11) **EP 2 453 146 A1**
(43) Date of publication of application: **16.05.2012**
(21) Application number: 10797169.9
(22) Date of filing: 08.07.2010
(51) Int. Cl.: F16F 1/18, H01M 2/10

(54) **NON-LINEAR SPRING STRUCTURE AND PRESSURE SPACER USING SAME**

(30) Priority: 08.07.2009 JP 2009162051
(71) Applicant: Captex Co., Ltd., Nagoya-shi, Aichi 460-8560 (JP)
(72) Inventor: JANUMA Mitsuo, Tokai-shi Aichi 476-0001 (JP); KOKAWA Daisuke, Tokai-shi Aichi 476-0001 (JP); ITOH Shuichi, Nagoya-shi Aichi 460-8560 (JP)
(74) Representative: Kramer - Barske - Schmidtchen
(86) International application number: PCT/JP2010/061601
(87) International publication number: WO 2011/004858

(57) **Abstract**

Provided are a pair of pressure plates and a spring unit 2 situated between the pair of pressure plates. The spring unit 2 has a plurality of springs 20. The spring 20 each has, in a longitudinally sectional shape thereof, a curved central portion 21 having a substantially arc shape projecting in a direction perpendicular to an expansion/contraction direction, a pair of curved end portions 22 each having a substantially arc shape projecting at extensions of both ends of the curved central portion 21 in a direction opposite to the projecting direction of the curved central portion 21, and base portions 23 formed by extending edges of the curved end portions 22 in substantially parallel with in the direction perpendicular to the expansion/contraction direction, wherein the base portions 23 are respectively secured to the pair of pressure plates so that the spring 20 is located between the pair of pressure plates. The spring 20 with a length in natural state has linear straight portions 24 between the curved central portion 21 and the curved end portions 22.

## Description

### TECHNICAL FIELD

The present invention relates to a spring structure having non-linear characteristics that can be used in, for example, a pressure spacer for applying a pressure to a battery cell (hereinafter, referred to as non-linear spring structure).

### BACKGROUND ART

In some conventional battery modules so far disclosed, for example, a plurality of battery cells capable of charging and discharging electricity, such as lithium ion cells or capacitors, are stacked on each other so that storage capacities thereof can be increased (see Patent Documents 1 - 3).
To make each of the plurality of battery cells thus stacked in the battery module fully exert its expected performance, it is effective to constantly apply a substantially invariable pressurizing force to each battery cell.

| | |
|---|---|
| Patent Document 1: | Unexamined Japanese Patent Applications Laid-Open No. 10-261426 |
| Patent Document 2: | Unexamined Japanese Patent Applications Laid-Open No. 2001-167745 |
| Patent Document 3: | Unexamined Japanese Patent Applications Laid-Open No. 2000-195480 |

### DISCLOSURE OF THE INVENTION

### PROBLEMS TO BE SOLVED BY THE INVENTION

When a plurality of battery cells are stacked on each other, to apply a pressure to each of the plurality of battery cells, it is desirable to additionally provide a suitable pressurizing function in a part of the stacked structure by interposing a pressure spacer between the battery cells, or on one or both ends of the battery cells in a direction where the battery cells are stacked. Further, pressure characteristics are desirably such that a substantially invariable pressurizing force can be constantly applied throughout repetitive expansion/contraction of a battery cell. Putting it differently, it is preferable to use such a spacer having a characteristic of a non-linear spring constant, that is, a characteristic that a spring reaction force is not proportional to displacement and the spring constant starts to lower at the point that the displacement increases to a certain extent.

However, it is impossible to say that a pressure spacer which is comparatively simply structured but capable of exhibiting pressure characteristics suitable for a battery cell has not been developed.
For example, the Patent Document 1 discloses a complicated structure provided with a bellows pressure adjuster, which is rather difficult to control.
A conical spring disclosed in the Patent Document 2, although exhibiting acceptable non-linear characteristics, is displaced with a point of action being shifted to and from a spring retainer supporting the conical spring. When the conical spring thus characterized is displaced, therefore, hysteresis is inevitably generated by a frictional force when the point of action is shifted. The friction-caused hysteresis is a bottleneck in repeatedly achieving a constant pressurizing force.
The flat spring disclosed in the Patent Document 3 is not expected to achieve the non-linear characteristics.

The present invention was accomplished in view of the conventional problems. The present invention provides a non-linear spring structure simply structured and capable of exhibiting non-linear characteristics with low likelihood of hysteresis, and a pressure spacer that enables to apply a substantially invariable pressurizing force to a member to be pressurized such as a battery cell.

### MEANS OF SOLVING THE PROBLEMS

A first aspect of the invention provides a non-linear spring structure comprising: a pair of pressure plates; and a spring unit provided between the pair of pressure plates, wherein the spring unit includes one spring or a plurality of springs, the spring has, in a sectional shape thereof when cut along an expansion/contraction direction (hereinafter, properly, referred to as a longitudinally sectional shape), a curved central portion having a substantially arc shape projecting in a direction perpendicular to the expansion/contraction direction; a pair of curved end portions each having a substantially arc shape, the pair of curved end portions projecting at extensions of both ends of the curved central portion in a direction opposite to the projecting direction of the curved central portion, and base portions formed by extending edges of the pair of curved end portions in the projecting direction of the curved central portion so as to extend in substantially parallel with the direction perpendicular to the expansion/contraction direction, and the base portions are respectively secured to the pair of pressure plates so that the spring is located between the pair of pressure plates.

A second aspect of the invention provides a pressure spacer which is configured to be interposed between a pair of binders of a stacked structure in which one or a plurality of members to be pressurized is nipped and held between the pair of binders to generate a pressurizing force to be applied to the one or the plurality of members to be pressurized, wherein the pressure spacer includes a non-linear spring structure according to the first aspect of the invention.

### EFFECTS OF THE INVENTION

The non-linear spring structure has the pair of pressure plates and the spring unit provided between the pressure plates, wherein the spring unit has one spring or a plurality of springs. The spring has the curved central portion, the curved end portions, and the base portions in the longitudinally sectional shape thereof. More specifically, the longitudinally sectional shape of the spring may be expressed as a near M-like shape wherein an angled section at the center of M constitutes the arc-shaped curved central portion, and side corner sections constitute the curved end portions. The base portions of the both ends are secured to the pair of pressure plates. Such a structural feature confers non-linear characteristics to the spring unit when a force is acting the pressure plates in a direction where the pressure plates are compressed.

In particular, the spring has the curved central portion in the longitudinally sectional shape, so when a compressive force is applied to the spring to displace the spring, the curved central portion and the pair of curved end portions are deformed with curvature radiuses thereof being reduced. Because the applied force is effected along with such deformation, the spring exhibits such non-linear characteristics that a spring constant becomes lower after the displacement from natural state advances and the load increases to a certain extent, reducing a rate of increase of the load relative to a degree of deformation.

Further, the spring is secured to the pressure plates by securing the base portions extending from the curved end portions to the pressure plates. This prevents any shift of a point of action between the spring and the pressure plates when the spring is expanded and contracted, thereby restraining the occurrence of hysteresis caused by, for example, friction. Therefore, the spring can lessen the likelihood of hysteresis.

An assembly including one spring or a plurality of springs thus having the non-linear characteristics constitutes the spring unit. Therefore, the whole non-linear spring structure is an elastic member having the non-linear characteristics and less likelihood of hysteresis. Such a non-linear spring structure is very useful for any intended purposes which demand non-linear characteristics in pressure loading.

The pressure spacer is provided with the non-linear spring structure as a means for applying a pressurizing force. When the pressure spacer is brought into abutment with a battery cell or any other member to be pressurized so that the spring unit of the non-linear spring structure is suitably contracted with a load applied thereto, the pressure spacer can constantly apply a less variable pressurizing force to the member to be pressurized regardless of repetition of any displacement of the member to be pressurized such as expansion/contraction. When the pressure spacer thus characterized is used, the battery cell or any other member to be pressurized can be suitably pressurized in a relatively simple structure, so that the member to be pressurized can fully exert its performance.

### BRIEF DESCRIPTION OF THE DRAWINGS

Fig. 1 is a perspective view of a pressure spacer in natural state in Embodiment 1.
Fig. 2 is a sectional view of the pressure spacer in Embodiment 1 cut along C-C line in Fig. 1.
Fig. 3 is a perspective view of a thin flat spring in Embodiment 1.
Fig. 4 is a plan view of a slit plate forming a part of a pressure application plate in Embodiment 1.
Fig. 5 is a plan view of pressing plates forming a part of the pressure application plate in Embodiment 1.
Fig. 6 is an illustration of a state where the thin flat springs are inserted through vertical slits formed in two slit plates laid on each other in Embodiment 1.
Fig. 7 is an illustration of a state where the two slit plates are spaced from each other to such an extent that abut base portions of the thin flat springs in Embodiment 1
Fig. 8 is an illustration of a state where a main pressing plate is laid on and joined with the slit plates in Embodiment
Fig. 9 is an illustration of a state where the thin flat springs are inserted through lateral slits formed in the slit plates in Embodiment 1.
Fig. 10 is an illustration where a pressure spacer is contracted by a load applied thereto in Embodiment 1.
Fig. 11 is an illustration of a battery module configuration in Embodiment 1.
Fig. 12 is a graph illustrating a stroke - load relationship variation depending on different projections of a curved central portion in a thin flat spring in Embodiment 2.
Fig. 13 is a graph illustrating a stroke - load relationship variation depending on different distances between base portions in the thin flat spring in Embodiment 2.
Fig. 14 is a graph illustrating a stroke - load relationship variation depending on different thickness dimensions of the thin flat spring in Embodiment 2.
Fig. 15 is an exploded view of single securing plates to be secured to base portions of a thin flat spring in Embodiment 2.
Fig. 16 is an illustration of securing positions of the single securing plates secured to the base portions of the thin flat spring in Embodiment 3.
Fig. 17 is an illustration of welding positions of the single securing plates secured to the base portions of the thin flat spring in Embodiment 3.
Fig. 18 is an illustration of a state where the single securing plates are arranged and bonded in a flat-topped manner in Embodiment 3.
Fig. 19 is an illustration of a state where the single securing plates of the thin flat springs perpendicular to another group of springs is joined with single securing plates of the another group of springs in Embodiment 3.
Fig. 20 is an illustration of a step of superposing a securing plate on the single securing plates so as to cover all of the single securing plates in Embodiment 3.
Fig. 21 is an illustration of a state where the securing plate is laid on the single securing plates so as to cover all of the single securing plates in Embodiment 3.
Fig. 22 is an illustration of a structure of a non-linear spring structure in Embodiment 4.
Fig. 23 is an exploded view illustrating a structure of a non-linear spring structure in Embodiment 5.
Fig. 24 is an illustration of the structure of the non-linear spring structure in Embodiment 5.
Fig. 25 is an illustration of a structure of a pressure spacer in Embodiment 6.
Fig. 26 is an illustration of an arrangement of non-linear spring structures constituting the pressure spacer in Embodiment 6.
Fig. 27 is an illustration of a compression distance - load relationship of a non-linear spring structure in Embodiment 7.
Figs. 28 are illustrations of a compression distance - shape variation relationship of a spring of the non-linear spring structure in Embodiment 7.
Figs. 29 respectively illustrate shapes of the non-linear spring structure in the following states in Embodiment 7; a) natural state before compression, b) a state where the compression distance is 1 mm, c) a state where the compression distance is 2 mm, d) a state where the compression distance is 3 mm, e) a state where the compression distance is 4 mm, and f) a state where the compression distance is 5 mm.
Fig. 30 is a plan view of a pressure spacer in Embodiment 8.
Fig. 31 is a front view of the pressure spacer when viewed from the direction of an arrow <a> in Fig. 31 in Embodiment 8.
Fig. 32 is a side view of the pressure spacer when viewed from the direction of an arrow <b> in Fig. 31 in Embodiment 8.
Fig. 33 is an illustration of a battery module configuration in Embodiment 9.
Fig. 34 is an illustration of a battery module configuration in Embodiment 10.

### MODE FOR CARRYING OUT THE INVENTION

According to the present invention, the spring with a length in natural state with no pressure being applied is preferably structurally **characterized in that** a distance between the curved central portion and the pair of curved end portions in the direction perpendicular to the expansion/contraction direction is shorter than an interval between the pair of base portions. As a result of the structural feature, an expansion/contraction distance where the non-linear characteristics are exhibited can be increased and a load capacity can also be increased as compared to an opposite structure in which the distance between the curved central portion and the pair of curved end portions in the direction perpendicular to the expansion/contraction direction is equal to or larger than the interval between the pair of base portions.

The spring with a length in natural state is preferably structurally c**haracterized in that** a curvature radius of the curved central portion is substantially equal to radiuses of curvature of the curved end portions. This structural feature facilitates the formation of straight portions described later.
Further, the spring with a length in natural state is preferably structurally **characterized in that** a linear straight portion is provided between the curved central portion and the curved end portions. This structural feature helps to reliably have an expected stroke and load capacity of the spring.

The spring with a length in unpressurized natural state is preferably structurally **characterized in that** an angle made by a pair of the straight portions with the curved central portion interposed therebetween is an obtuse angle.
This structural feature further helps to reliably have an expected stroke and load capacity of the spring. In the case where the angle made by the pair of the straight portions is at most 90 degrees, it become more difficult to obtain the expansion/contraction distance enough to accomplish the non-linear characteristics and to obtain the load capacity in comparison with the case that the angle is an obtuse angle. More desirably, the angle made by the pair of the straight portions with the curved central portion interposed therebetween in the spring with a length in natural state is in the range of 145 - 175 degrees.

A preferable material of the spring is titanium or titanium alloys.
Any material having an enough elasticity, such as spring steel, is usable. The most desirable material has a broad range of elasticity with a smaller likelihood of hysteresis. Examples of such a material are titanium and titanium alloys. The titanium and titanium alloys thus having superior mechanical characteristics have other advantageous characteristics in practical use such as lightness in weight and resistance to corrosion.

Usable examples of the pressure application plate are various plates made of metals including clad steel, and various plates made of resins including carbon fiber-reinforced plastic and so on. The material is not necessarily limited as far as the pressure application plate can have an adequate strength, and any suitable materials yet to be known, which will be developed in the future, are also usable.

The spring unit preferably has at least a unit structure in which the springs in pair are arranged so that the center projecting portions of these springs in the respective longitudinally sectional shapes are projecting in opposite directions. The two springs thus projecting in opposite directions can prevent the occurrence of a biased reaction force during the expansion/contraction motion, thereby structurally stabilizing the unit structure. The non-linear spring structure may be just one unit structure or a plurality of unit structures arranged in the same plane. When such a unit structure is used, design changes can be flexibly adopted depending on an area to be pressurized.

In the spring unit provided with a plurality of springs, the springs are preferably arranged so that at least a part of the center projecting portions in the respective longitudinally sectional shapes are projecting in a direction different to the other center projecting portions in place of arranging the springs so that not all of the center projecting portions thereof are projecting in the same direction. This preferable structure can avoid the event that the springs incline to one side during the expansion/contraction, causing the upper and lower pressure plates to positionally shift to right or left. This provides a more stable and reliable structure.

When a thin flat spring described later is used as the spring, it is preferable that the thin flat springs be arranged so that a longitudinal direction of at least a part of the thin flat springs, which is a planar direction perpendicular to the expansion/contraction direction, is not in parallel with a longitudinal direction of the other thin flat springs. Although some of the thin flat springs may be arranged so that their longitudinal directions are in parallel with each other, at least a part of the thin flat springs are preferably arranged so that their longitudinal directions are not in parallel with the parallel-arranged thin flat springs. This preferable structure can avoid the event that the springs incline to one side during the expansion/contraction, causing the upper and lower pressure plates to positionally shift to right or left. This provides a more stable and reliable structure.

The spring unit may have at least a group of springs arranged with such a regularity that the longitudinally sectional shapes of the springs are laid out in the same direction.
The group of springs thus arranged can lessen an interval between the adjacent springs, thereby allowing more springs to be provided per unit area. When springs having the longitudinally sectional shapes laid out in a different direction are provided apart from the group of springs, a structural stability during the expansion/contraction can be improved.

When a thin flat spring is used as the spring, it is preferable to provide a group of springs arranged so that the longitudinal directions of these springs are in parallel with each other and the curved central portions thereof are projecting in the same direction, wherein the thin flat springs are provided on both ends of the group of springs in the longitudinal direction so that the longitudinal directions of the thin flat springs and the group of springs are perpendicular to each other, and the curved central portions of the thin flat springs are projecting outward in contrast to the group of springs.
The group of springs thus arranged can lessen an interval between the adjacent springs, thereby allowing more springs to be provided per unit area. Further, thin flat springs having the longitudinally sectional shapes laid out in a different direction may be provided apart from the group of springs. This structural feature can avoid the event that the thin flat springs incline to one side during the expansion/contraction, causing the upper and lower pressure plates to positionally shift to right or left. This provides a more stable and reliable structure.

At least two groups of springs may be provided, wherein thin flat springs constituting the two groups of springs are arranged so that the longitudinal directions of the thin flat springs are in parallel with each other, and the curved central portions of the two groups of springs are projecting outward in opposite directions. This structural feature can provide a well-balanced spring structure in which the springs are bilaterally symmetrically arranged.

The pressure application plate preferably includes flat pressing plates and slit plates each having a large number of slits formed correspondingly with the arrangement of springs, wherein the springs are inserted through the slits of the slit plates so that the base portions of the springs are immovably nipped and held between the slit plates and the pressing plates.
According to the structural feature wherein the base portions are firmly nipped and held between the slit plates and the pressing plates, the whole pressure spacer can have a better structural stability. Another advantage is that the springs can be easily located in the presence of the slits.

The base portions are preferably secured to between the slit plates and the pressing plates by resistance welding, YAG laser welding, or any other welding means (hereinafter, simply referred to as welding, properly). In place of these welding techniques, the base portions may be secured by caulking or bonded with an adhesive.

The base portions of the springs may be immovably nipped and held between two single securing plates each having a rectangular shape, and the pressure plates have a structure where the single securing plates are coplanarly disposed with adjacent end portions thereof being joined with each other, and securing plates are laid on the single securing plates so as to cover all of the single securing plates.
This structural feature makes it unnecessary to use the slit plates where the slits are formed.

It is preferable that the base portions be secured to the single securing plates by welding or caulking. Accordingly, three layers, which are the inner single securing plate, the base portions, and the outer single securing plate, can be easily and firmly joined with one other.
The end portions of the single securing plates can be joined with each other by welding or caulking. The single securing plates and the securing plates may be joined by welding or caulking. In place of the welding or caulking technique, an adhesive may be used.

Unless stated that the springs constituting the spring unit are the thin flat springs, any spring having any other shape but the flat shape can be used as far as the spring has the curved central portion, the curved end portions, and the base portions in a longitudinally sectional shape thereof.
Of all the potential springs, the thin flat spring is most desirably used. The thin flat spring can be easily obtained by simply bending a flat and thin spring material, and its flat plate shape can achieve a high rigidity in some directions. Therefore, the whole non-linear spring structure can have a better structural stability.
Though the thickness of the thin flat spring is not particularly limited, a practical range of the thickness may be 0.01 mm - 0.2 mm.

An example of the spring is a thin cylindrical spring having a circular shape in transverse section. The thin cylindrical spring can be more easily produced than the thin flat spring, and the pressurizing force can be easily adjusted depending how many thin cylindrical springs are used.
Though the size of the thin cylindrical spring is not particularly limited, the thin cylindrical spring preferably has an outer diameter in the range of 0.01 mm - 1.0 mm.

As described earlier, the non-linear spring structure is suitably used in a pressure spacer for battery cell. The battery cell described in this specification refers to a battery cell capable of charging and discharging electricity such as a lithium ion battery cell or a capacitor. The non-linear spring structure can be suitably used for various intended purposes which demand the application of a constant pressurizing force to a member to be pressurized regardless of any volume variation of the member to be pressurized. For example, the non-linear spring structure can be used as a pressure application device in, for example, a cooking device, a pharmaceutical device, an aseptic test chamber, and a storage for food and medicine which requires pressure adjustment to keep a constant pressure in an airtight chamber irrespective of any volume variation.

### EMBODIMENTS

### EMBODIMENT 1

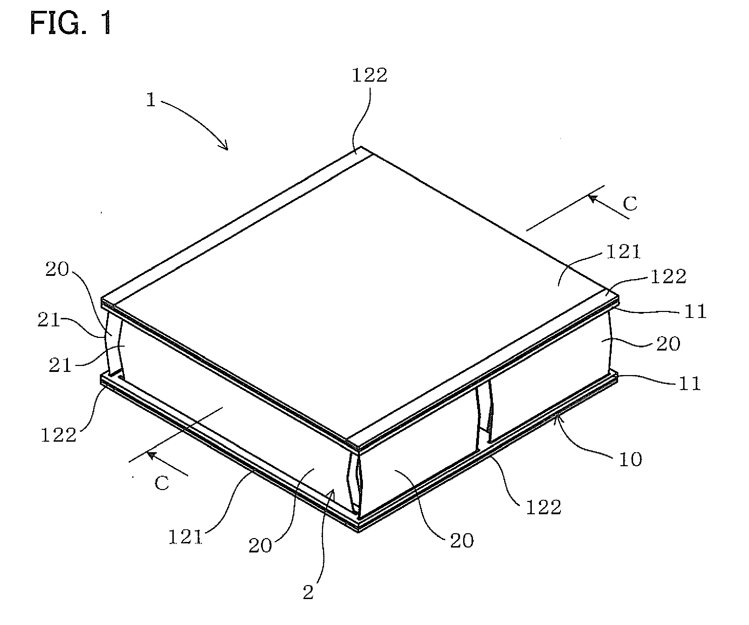

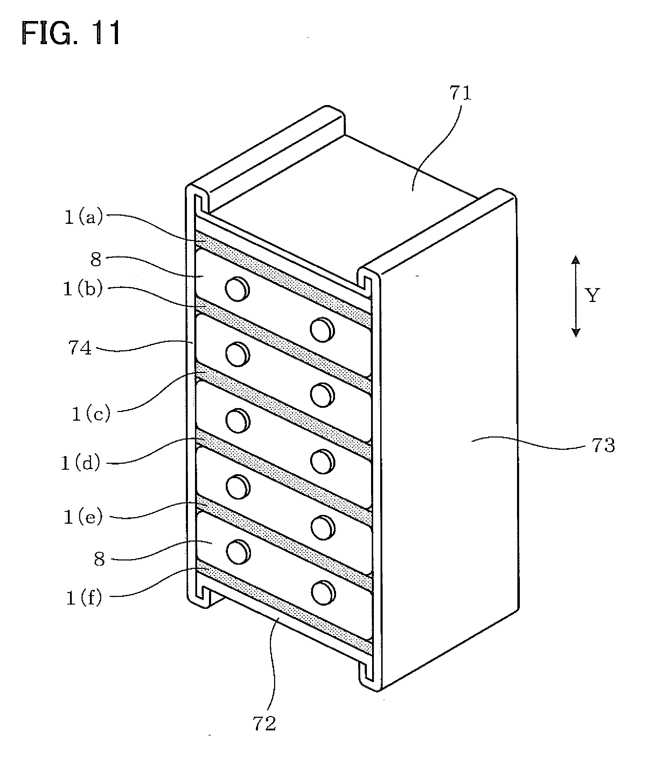

Hereinafter, a pressure spacer including a non-linear spring structure according to an embodiment of the present invention is described referring to Figs. 1 - 11.
A pressure spacer 1 including a non-linear spring structure according to the present embodiment is a pressure spacer for applying a pressurizing force to a stacked structure having a plurality of battery cells 8 as illustrated in Fig. 11. As illustrated in Fig. 1, the pressure spacer 1 has a pair of pressure plates 10, and a spring unit 2 provided between the pair of pressure plates 10.

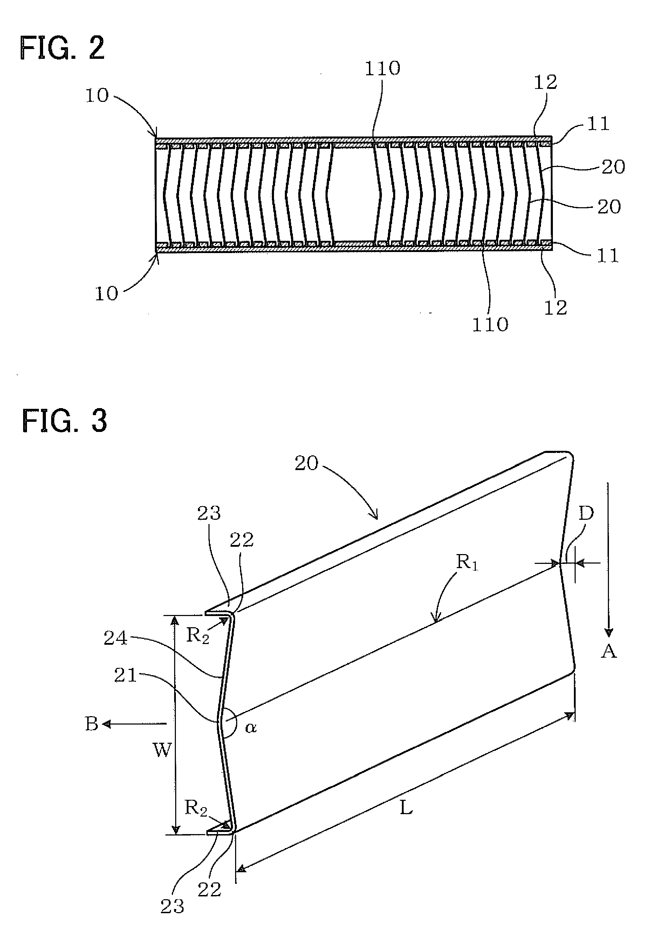

The spring unit 2 has a plurality of thin flat springs 20 arranged as illustrated in Figs. 2, and 6 - 9.
As illustrated in Fig. 3, the thin flat spring 20 has, in a longitudinally sectional shape thereof, a curved central portion 21 having a substantially arc shape projecting in a direction B perpendicular to an expansion/contraction direction A, a pair of curved end portions 22 each having a substantially arc shape, the pair of curved end portions 22 projecting at extensions of both ends of the curved central portion 21 in a direction opposite to the projecting direction of the curved central portion, and base portions 23 formed by extending edges of the curved end portions 22 in the direction B perpendicular to the expansion/contraction direction. The thin flat springs 20 are located between the pair of pressure plates 20 by securing the base portions 23 thereof to the pressure plates 10.

Below is given a more detailed description.
Observing the longitudinally sectional shape of the thin flat spring 20 with a length in natural state which is situated so that the curved central portion 21 thereof is projecting downward, the longitudinally sectional shape is substantially an M-like shape. More specifically, the longitudinally sectional shape is such a shape that the alphabet M is laterally stretched, wherein an angled section at the center constitutes the curved central portion 21, and side corner sections constitute the curved end portions 23.
The thin flat spring 20 with a length in natural state has linear straight portions 24 provided between the curved central portion 21 and the curved end portions 22. In the thin flat spring 20 with a length in natural state, an angle α made by the pair of straight portions 24 is an obtuse angle, more specifically, an angle ranging from 170 degrees to 175 degrees.

In the thin flat spring 20 with a length in natural state, a curvature radius R₁ of the curved central portion 21 is 1 mm, and a curvature radius R₂ of the curved end portions 22 is 1 mm. Thus, the curvature radius R₁ of the curved central portion 21 is equal to the curvature radius R₂ of the curved end portions 22 in the thin flat spring 20.
In the thin flat spring 20 with a length in natural state, a distance D between the curved central portion 21 and the pair of curved end portions 22 in the direction B perpendicular to the expansion/contraction direction A of the thin flat spring 20 (projection D) is adequately smaller than an interval W between the pair of base portions 23.
The present embodiment used the thin flat springs 20 in which a width dimension (interval between the base portions 23) W is 27 mm, and a longitudinal length L is 45 mm and 90 mm.
The thin flat spring 20 was produced from a titanium alloy having a thickness dimension in the range of 0.12 mm - 0.13 mm.

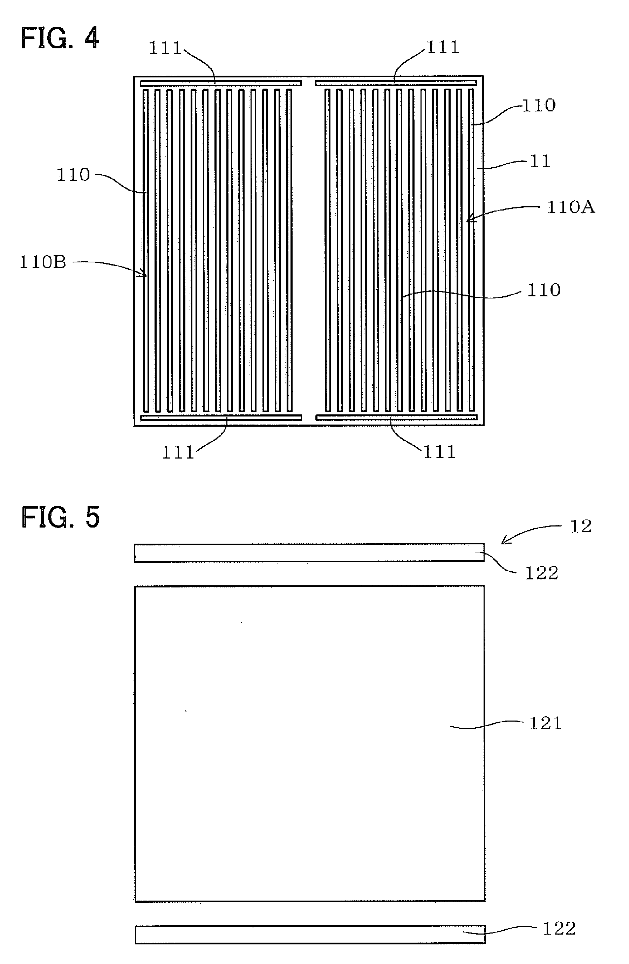

As illustrated in Figs. 2, 4, and 5, the pressure application plate 10 according to the present embodiment has slit plates 11 each having a large number of slits 110 and 111 formed correspondingly with the arrangement of the thin flat springs 20, and flat pressing plates 12.
As illustrated in Fig. 4, the slit plates 11 each having a rectangular external shape were produced from a stainless steel plate. As illustrated in the drawing, the slit plates 11 each has, at two positions on the right and left sides, a group of slits 110A and a group of slits 110B each having 13 vertical slits 110 longitudinally formed and spaced at equal intervals in parallel with one another. Apart from the groups of slits 110A and 110B, lateral slits 111 were formed in a lateral direction perpendicular to the vertical slits 110 at positions lateral to both-end sides of the groups of slits 110A and 110B.

The pressing plate 12 laid on the slit plate 11 each includes a main pressing plate 121 which covers the groups of slits 110A and 110B, and two side pressing plates 122 which cover the lateral slits 111. These pressing plates were produced from aluminum alloy plates.
Hereinafter is described a structural relationship wherein the thin flat springs 20 are joined with the pressure plates 10 including the slit plates 11 and the pressing plates 12 and steps of assembling these plates.

First, long and short thin flat springs 20 were prepared; 26 thin flat springs having the length L = 90 mm, and four thin flat springs having the length L = 45 mm.
Further were prepared; two slit plates 11, and two main pressing plates 121 and four side pressing plates 122 constituting the respective pressing plates 12.

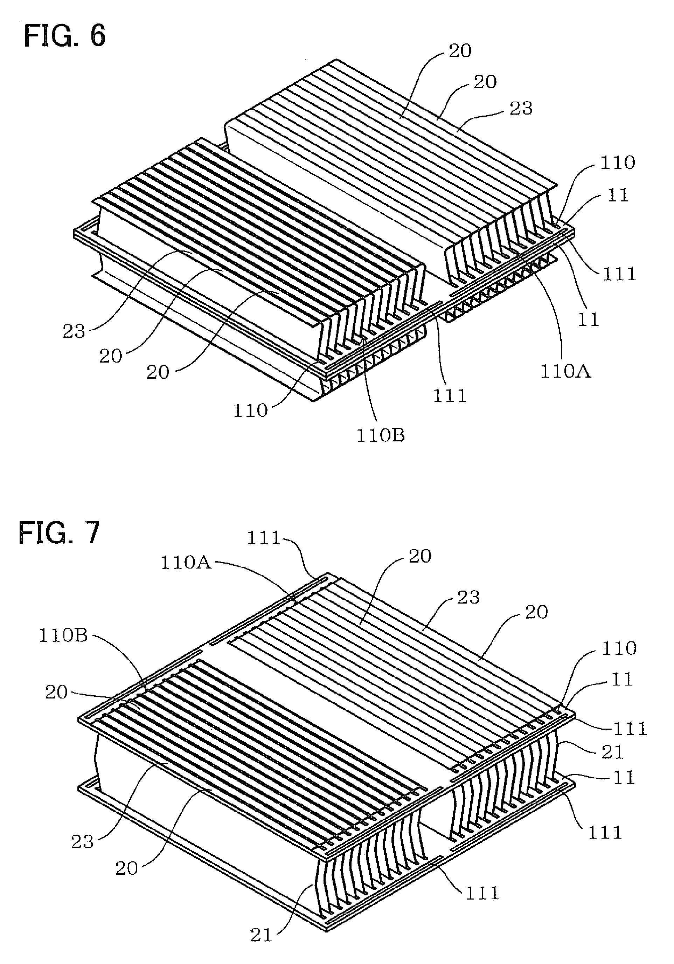

As illustrated in Fig. 6, the two slit plates 11 were laid on each other, and the long thin flat springs 20 were inserted through the vertical slits 110 of these plates. The thin flat springs 20 inserted through the group of slits 110 A were all arranged so that the curved central portions 21 thereof were projecting on the opposite side of the group of slits 110B, and the thin flat springs 20 inserted through the group of slits 110 B were all arranged so that the curved central portions 21 thereof were projecting on the opposite side of the group of slits 110A.

As illustrated in Fig. 7, the two slit plates 11 were spaced from each other and brought into contact with inner surfaces of the base portions 23 on both ends of the thin flat springs 20. An adhesive was applied to between the slit plates 11 and the base portions 23 so that they were firmly bonded.

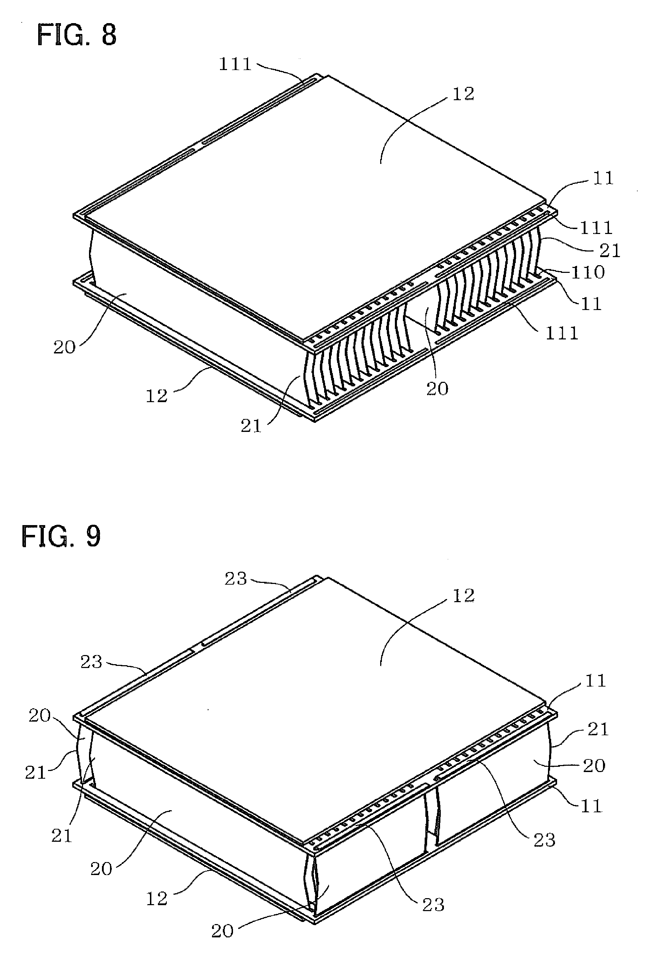

As illustrated in Fig. 8, the main pressing plates 121 were laid on surfaces of the slit plates 11 where the groups of slits 110A and 110B were formed. The adhesive used earlier is also used to firmly bond the plates. Then, the base portions 23 of the thin flat springs 20 were immovably nipped and held between the slit plates 11 and the main plates 121.

As illustrated in Fig. 9, the base portions 23 of the short thin flat springs 20 were inserted through the lateral slits 112 of the slit plates 11. The thin flat springs 20 were situated so that the curved central portions 21 thereof were directed outward.
As illustrated in Fig. 1, the side pressing plates 122 were laid on surfaces of the slit plates 11 where the lateral slits 112 were formed. The adhesive used earlier is also used to firmly bond these plates. Then, the base portions 23 of the thin flat springs 20 were immovably nipped and held between the slit plates 11 and the side plates 122. As a result of these steps, the production of the pressure spacer 1 according to the present embodiment was completed.

In the pressure spacer 1 thus obtained, the thin flat springs 20 are divided into a first group of springs inserted through the group of slits 110A and a second group of springs inserted through the group of slits 110B. All of the thin flat springs 20 included in the same group of springs are arranged so that the curved central portions 21 thereof are projecting in the same direction. Such an arrangement of the springs avoids any interference between the adjacent thin flat springs 20 in the case where the expansion/contraction makes the curved central portions 21 even further project. The spring arrangement can make the intervals between the thin flat springs 20 as narrow as structurally feasible, thereby allowing more thin flat springs 20 to be provided per unit area.

The thin flat springs 20 inserted through the lateral slits 111 are provided on longitudinal both ends of the respective groups of springs. These thin flat springs are situated so that longitudinal directions thereof are perpendicular to the groups of springs and the curved central portions 21 thereof are projecting outward in contrast to the groups of springs. Thus, the thin flat springs 20 are arranged so that the longitudinal direction of a part of the thin flat springs 20 perpendicular to the expansion/contraction direction are not in parallel with but are perpendicular to that of the other thin flat springs. This structural feature helps to prevent the event that the thin flat springs 20 incline to one side during the expansion/contraction, causing the upper and lower pressure plates 10 positionally shift to right or left. This provides a more stable and reliable structure.

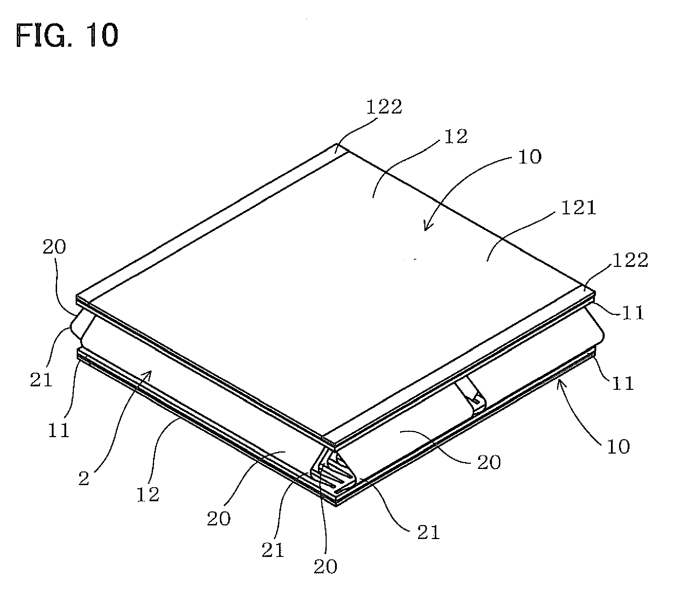

As illustrated in Fig. 10, when the pressure spacer 1 is used, the pair of pressure plates 10 is compressed so that a force generated from the spring unit 2 is constantly applied to a battery cell. The pressure spacer 1 according to the present embodiment has the spring unit 2 provided with a large number of thin flat springs 20 formed in the unique shape described so far. Therefore, when a force is applied thereto so that the pair of pressure plates 10 is compressed, the spring unit 2 exhibits non-linear characteristics.
In particular, thin flat spring 20 has the curved central portion 21, so when a compressive force is applied to the thin flat spring 20 to displace the spring, the curved central portion 21 and the pair of curved end portions 22 are deformed with curvature radiuses thereof being reduced. Because the applied force is effected along with such deformation, the thin flat spring 20 exhibits such non-linear characteristics that a spring constant becomes lower after the displacement from natural state advances and the load increases to a certain extent, reducing a rate of increase of the load relative to a degree of deformation.

The thin flat springs 20 are secured to the pressure plates 10 by securing the base portions 23 extending from the curved end portions 22 to the pressure plates 10. This prevents any shift of a point of action between the spring and the pressure plates when thin flat springs 20 are expanded and contracted, thereby restraining the occurrence of hysteresis caused by, for example, friction. Therefore, the thin flat spring 20 can lessen the likelihood of hysteresis.

An assembly including a plurality of thin flat springs 20 thus having the non-linear characteristics constitutes the spring unit 2 of the pressure spacer 1. Therefore, the whole pressure spacer 1 is an elastic member having the non-linear characteristics and less likelihood of hysteresis. So, as shown in Fig. 11, when the pressure spacer 1 is brought into abutment with a battery cell 8 and a given load is applied thereto so that the spring unit 2 is contracted as illustrated in Fig. 11, a substantially invariable pressurizing force can be constantly applied to the battery cell 8 regardless of repetition of any displacement of the battery cell 8 such as expansion/contraction. As illustrated in the drawing, when the pressure spacer 1 is employed, a battery module 7 can make each battery cell 8 fully exert its expected performance with a relatively simple structure.

As illustrated in Fig. 11, the battery module 7 may have a structure where a plurality of battery cells 8 stacked in a thickness direction (direction of an arrow Y) are housed in a housing chamber encompassed by a top plate 71, a bottom plate 72, and two side plates 73 and 74. The battery module 7 has a stacked structure where the battery cells 8, which are a plurality of members to be pressurized, are immovably nipped and held between the top plate 71 and the bottom plate 72 which are a plurality of binders. In the stacked structure, the pressure spacers 1 are each interposed between the battery cells 8, and the pressure spacers 1 and the battery cells 8 are housed in the housing chamber with a load being applied to the pressure spacers 1, in other words, with an overall thickness being reduced by a predetermined dimension. As a result, the load applied to the spring units 2 of the pressure spacers 1 is acting on each of the battery cells 8 as a pressurizing force.

In place of interposing each of the pressure spacers 1 between the battery cells 8 as illustrated in the drawing, a plurality of battery cells 8 may be directly stacked or stacked with spacers other than the pressure spacers 1 interposed therebetween, wherein one or two pressure spacers 1 are provided on one end or both ends of the stacked structure. More specifically describing the suggested structure, the pressure spacer 1 may be provided only at a spacer position 1 (a) of the stacked structure illustrated in Fig. 11, and non-expandable spacers for ventilation may be provided at any other spacer positions 1 (b) - (f).

In the present embodiment, the thin flat springs 20 having a relatively large length constitute the spring unit 2. However, thin flat springs having a smaller length can be used, and thin cylindrical springs having a circular shape in transverse section may be used in place of the thin flat springs. The pressuring force can be adjusted by the number or shape of springs used.

### EMBODIMENT 2

The present embodiment, wherein the thin flat springs 20 described in the embodiment 1 were similarly used, checked a variation tendency of the spring characteristics when a dimensional relationship between the respective members are changed.
First, a projection D of the curved central portion 21 of the thin flat spring 20 (Fig. 3) was changed to measure a stroke - load relationship. To increase the projection D leads to reduction of the curvature radius of the curved central portion 21 and further leads to reduction of the angle α made by the pair of straight portions 24 (Fig. 3).

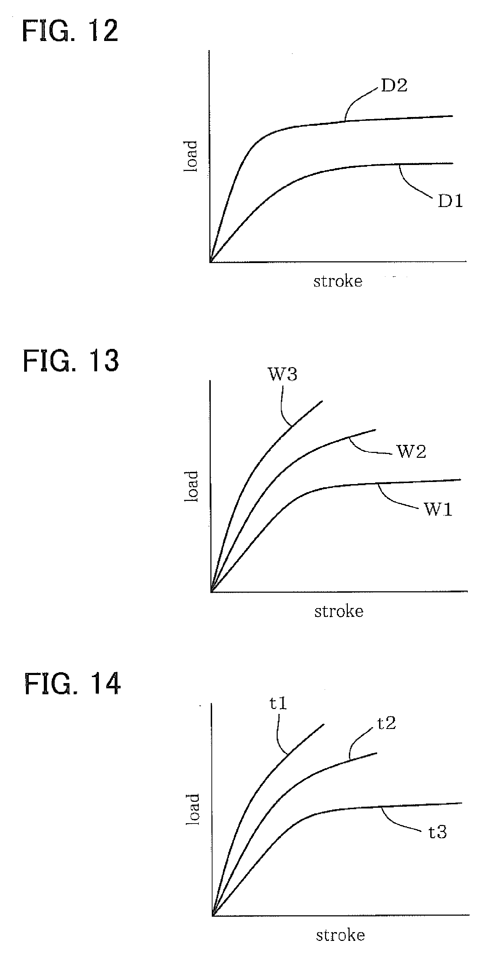

In Fig. 12, a lateral axis represents the stroke and a vertical axis represents the load, wherein a solid line D1 denotes a result of the projection D having a large value, and a solid line D2 denotes a result of the projection D having a smaller Value. As is known from the drawing, the stroke needed to reach a region where the non-linear characteristics are fully gained becomes larger, and the load in the region becomes smaller as the projection D increases.

Next, a distance W between the base portions 23 (Fig. 3) was changed in the thin flat spring 20 with the unchanged projection D to measure the stroke - load relationship.
In Fig. 13, a lateral axis represents the stroke and a vertical axis represents the load, wherein a solid line W1 denotes a result of the distance W having a largest value, a solid line W3 denotes a result of the distance W having a smallest value, and a solid line W2 denotes a result of the distance W having an intermediate value. As is known from the drawing, the stroke needed to reach the region where the non-linear characteristics are fully gained becomes larger, and the load in the region becomes smaller as the distance W increases.

Next, a plate thickness t was changed in the thin flat spring 20 having the same shape to measure the stroke - load relationship.
In Fig. 14, a lateral axis represents the stroke and a vertical axis represents the load, wherein a solid line t1 denotes a result of the plate thickness t having a largest value, a solid line t3 denotes a result of the plate thickness t having a smallest value, and a solid line t2 denotes a result of the plate thickness t having an intermediate value. As is known from the drawing, the stroke needed to reach the region where the non-linear characteristics are fully gained becomes larger, and the load in the region becomes smaller as the plate thickness t decreases.

Once how the dimensions and characteristics affect each other is expressly identified, any desirable thin flat spring 20 can be relatively easily produced by adjusting sizes of the respective members depending on required characteristics. The characteristics described so far can be obtained in any springs including the thin flat spring and the thin cylindrical spring as far as the spring has, in a longitudinally sectional shape, a curved central portion having a substantially arc shape projecting in a direction perpendicular to the expansion/contraction direction, a pair of curved end portions each having a substantially arc shape, the pair of curved end portions projecting at extensions of both ends of the curved central portion in a direction opposite to the projecting direction of the curved central portion, and base portions formed by extending edges of the pair of curved end portions in the projecting direction of the curved central portion so as to extend in substantially parallel with the direction perpendicular to the expansion/contraction direction.

### EMBODIMENT 3

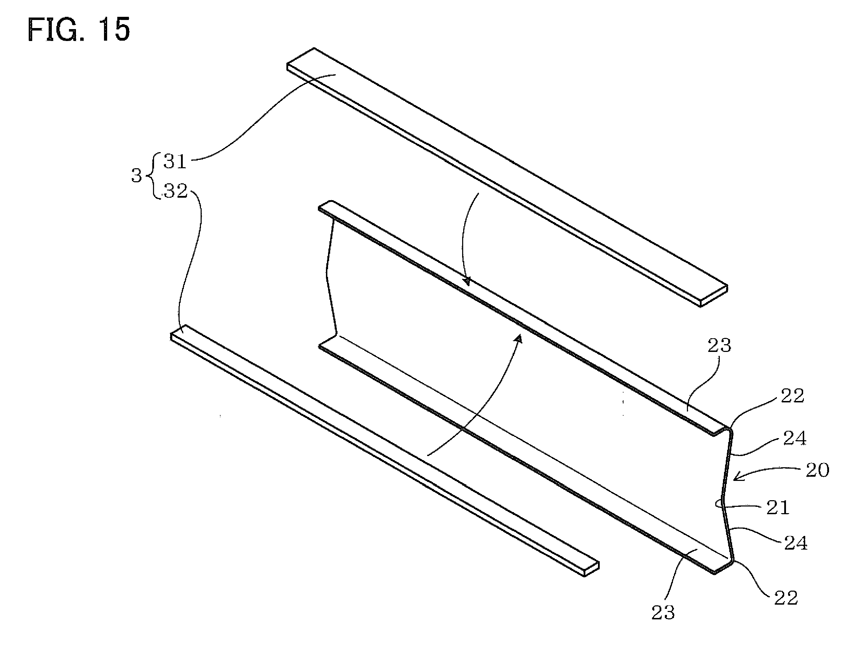

In a pressure spacer 102 according to the present embodiment, the pressure plates according to EMBODIMENT 1 were differently configured, the arrangement of the thin flat springs 20 was slightly changed, and the assembling steps were changed. Referring to Figs. 15-21, a structure of the pressure spacer 102 is described according to assembling steps thereof.

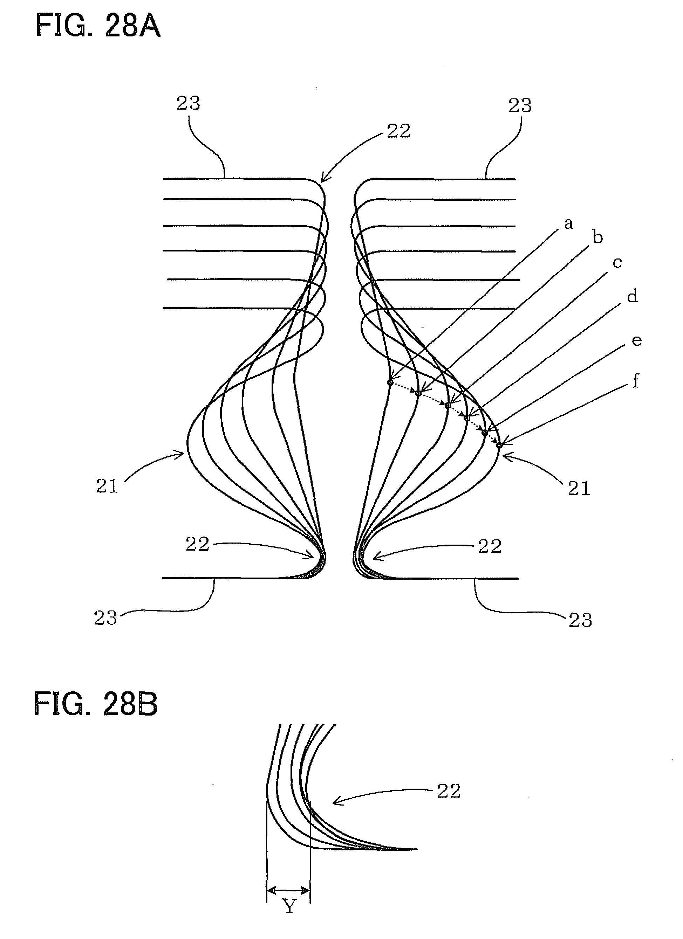

As illustrated in Fig. 15, 28 long thin flat springs 20 having the length L = 90 mm were prepared.
Further, rectangular single securing plates 3 were prepared and used to nip the base portions 23 of the respective thin flat springs 20. The single securing plates 3 includes a first single securing plate 31 to abut on outer side surfaces of the base portions 23, and a second single securing plate 32 to abut on inner surfaces of the base portions 23. These plates were produced from stainless steel for rust prevention. The first single securing plate 31 has a larger width dimension than the base portions 23, and the second single securing plate 32 has a smaller width dimension than the first single securing plate 31.

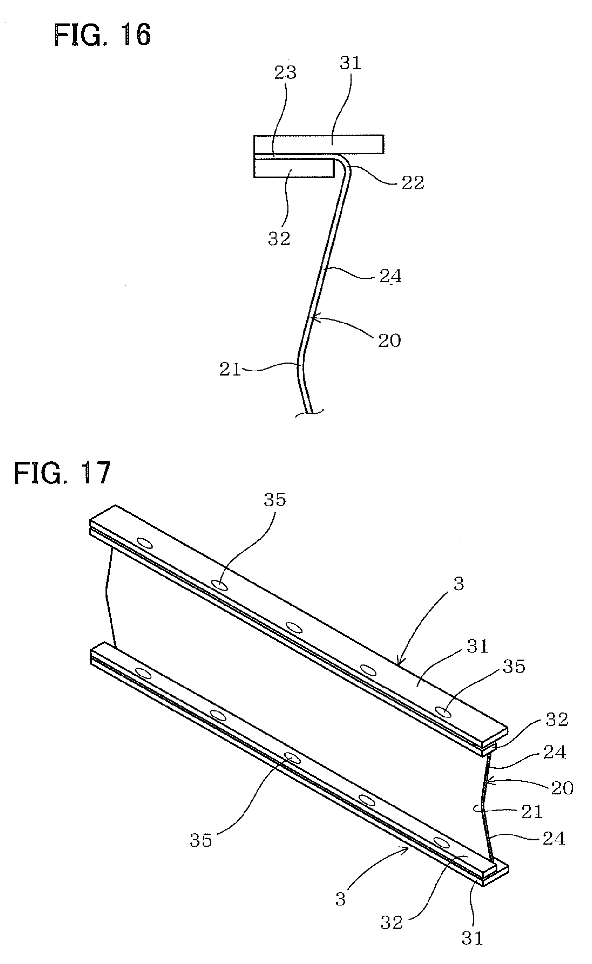

As illustrated in Figs. 16 and 17, the first single securing plate 31 was brought into abutment with the outer surfaces of the base portions 23 of the respective thin flat springs 20, and the second single securing plate 32 was brought into abutment with the inner surfaces of the base portions 23 of the respective thin flat springs 20, so that these three layers are stacked on one another. Then, the whole three-layer structure was subjected to resistance welding at five welding positions 35 in the longitudinal direction. As a result, the base portions 23 were nipped and held between the single securing plates 3. The resistance welding may be replaced by any other conventional welding technique.

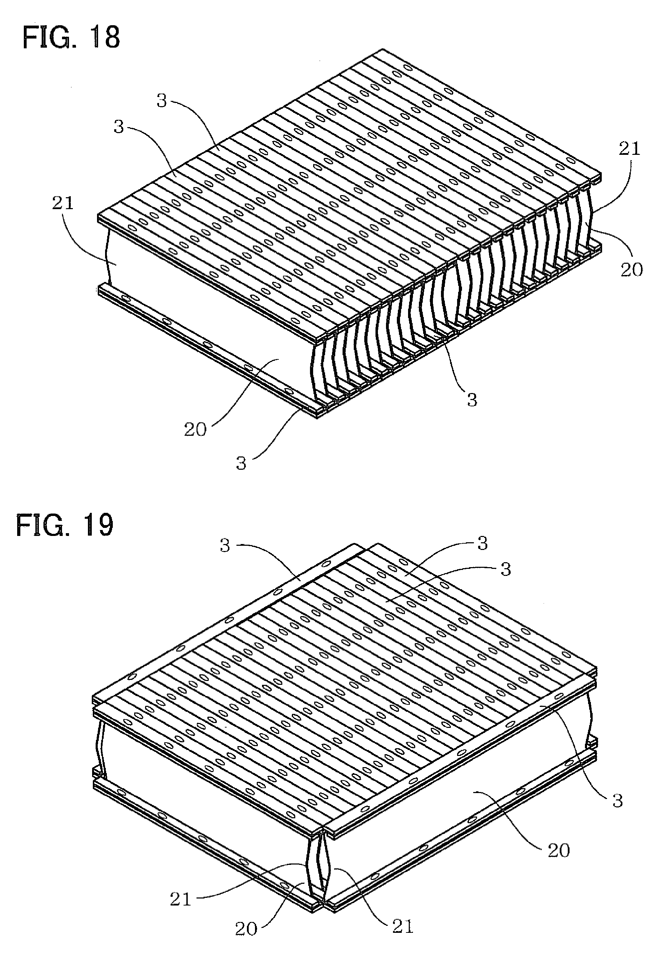

As illustrated in Fig. 18, the single securing plates 3 were coplanarly disposed, and adjacent end portions thereof were welded by YAG laser welding. The YAG laser welding may also be replaced by any other conventional welding technique (the same shall apply hereinafter). Then, two groups of springs each having 13 thin flat springs 20 were prepared, wherein the longitudinal directions were in parallel with one another and the curved central portions 21 were all projecting in the same direction. These two groups of springs were arranged in opposite directions so that the curved central portions 21 thereof were directed outward.

As illustrated in Fig. 19, the thin flat sprigs 20 were each arranged on both end sides of the groups of springs so that the longitudinal directions of the thin flat springs 20 were perpendicular to those of the two groups of springs and the curved central portions 21 of the thin flat sprigs 20 were projecting in a direction opposite to the two groups of springs. In the present embodiment, the thin flat springs 20 were each situated along the end portions of the two groups of springs. Then, the single securing plates 3 of the thin flat springs 20 perpendicular to the two groups of springs were welded to the single securing plates 3 of the two groups of springs by YAG laser welding. The YAG laser welding may be replaced by TIG welding.

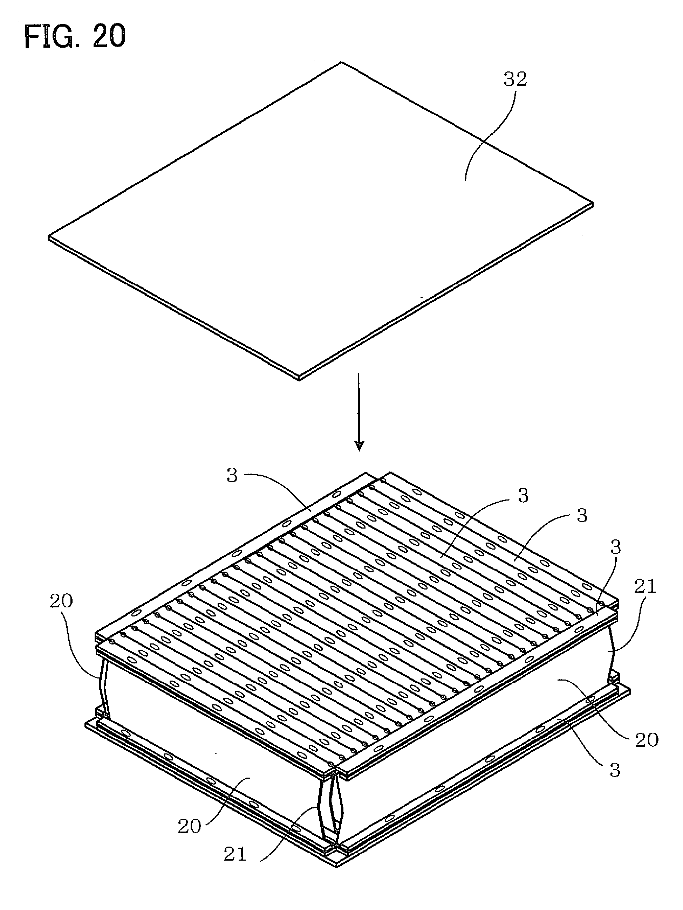

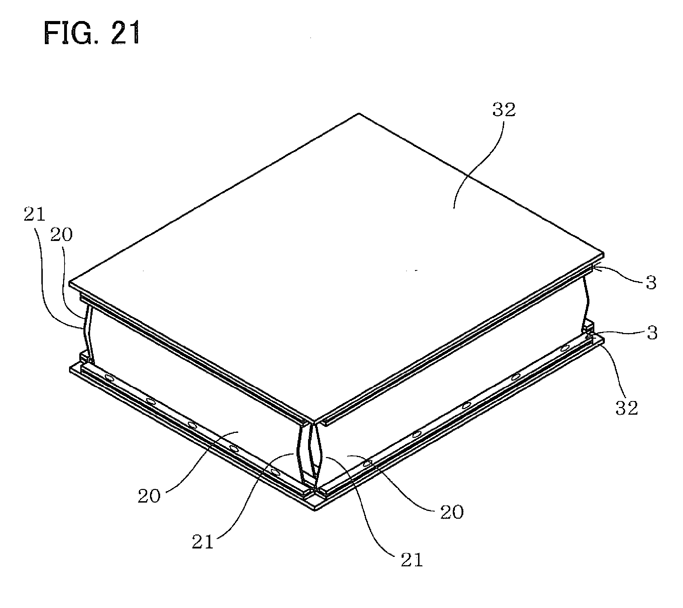

As illustrated in Fig. 20, securing plates 32 large enough to cover the whole single securing plates 3 thus joined to one another were prepared. The securing plates 32 were made of stainless steel. As illustrated in Fig. 21, the securing plates 32 were laid on outer side surfaces of the single securing plates 3 and joined thereto by YAG laser welding at welding positions between rear surfaces of the securing plates 32 and the end portions of the single securing plates 3.
In the pressure spacer 102 thus obtained, the stacked single securing plates 3 and securing plates 32 constitute pressure plates 30.
The pressure spacer 102 thus obtained exerts an operational effect similar to that of EMBODIMENT 1.

### EMBODIMENT 4

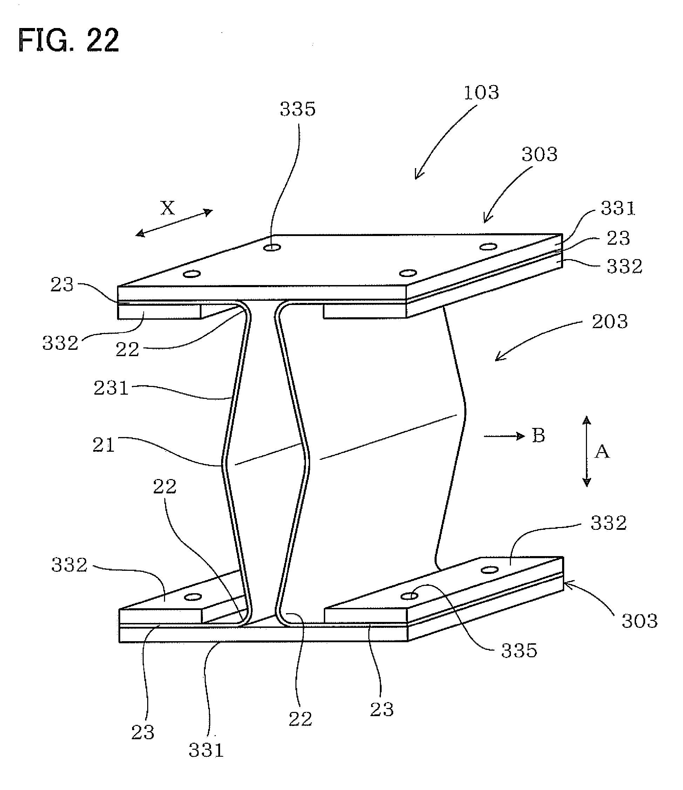

The present embodiment is directed to a spring structure 103 including a unit structure alone, wherein two thin flat springs 231 constitute a spring unit 203 as illustrated in Fig. 22.
As illustrated in the drawing, the spring structure 103 has a pair of pressure plates 303 and a spring unit 203 provided between the pair of pressure plates 303.

The two thin flat springs 231 constituting the spring unit 203 each has a longitudinally sectional shape structured similarly to that of the thin flat spring 20 according to EMBODIMENT 1, wherein, provided are; a curved central portion 21 projecting in a direction B perpendicular to an expansion/contraction direction A, a pair of curved end portions 22 each having a substantially arc shape projecting at extensions of both ends of the curved central portion 21 in a direction opposite to the projecting direction of the curved central portion 21, and base portions 23 formed by extending edges of the pair of curved end portions 22 in substantially parallel with the direction B perpendicular to the expansion/contraction direction. Any member having the same function as that of EMBODIMENT 1 is described with the same reference numeral.

In the spring unit 203, the two thin flat springs 231 were arranged so that the center projecting portions 21 in their longitudinally sectional shapes were projecting in directions opposite to each other.
The pressure plates 303 each was constructed by combining a square outer plate 331, and rectangular inner plates 332.

As illustrated in Fig. 22, the base portions of the thin flat springs 231 were respectively nipped and held between the outer plates 331 and the inner plates 332, and a whole stacked structure thus obtained was subjected to burring caulking at joining positions 335, so that the pressure plates 303 and the base portions 23 of the thin flat springs 231 were joined with each other.

A non-linear spring structure 103 including only the unit structure thus obtained can be directly used for various intended purposes as a pressure application means. As described in EMBODIMENT 6 later, a non-linear spring structures 103 may be used plurally in combination.

### EMBODIMENT 5

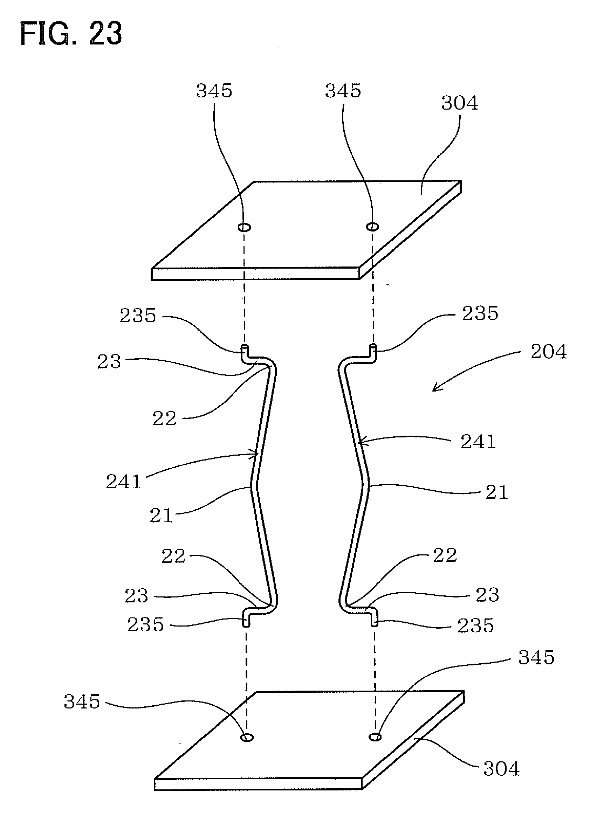

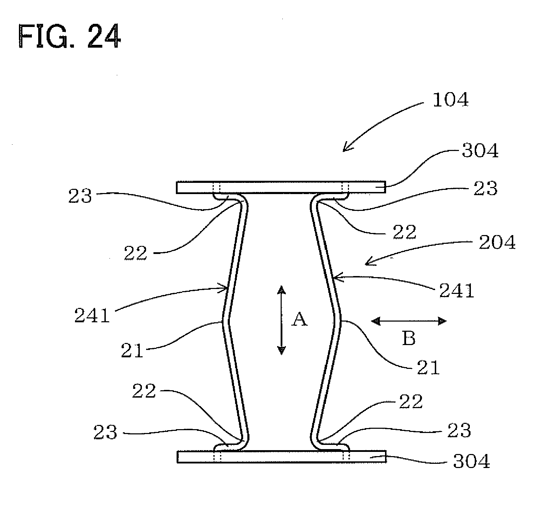

The present embodiment is directed to a spring structure 104 having a unit structure alone, wherein two thin cylindrical springs 241 constitute a spring unit 204 as illustrated in Figs. 23 and 24.
As illustrated in the drawing, the spring structure 104 has a pair of pressure plates 304 and a spring unit 204 provided between the pair of pressure plates 304.

The two thin cylindrical springs 241 constituting the spring unit 204 each has a circular shape in transverse section but has, in a longitudinally sectional shape thereof, a curved central portion 21 having a substantially arc shape projecting in a direction B perpendicular to an expansion/contraction direction A, a pair of curved end portions 22 each having a substantially arc shape, the pair of curved end portions 22 projecting at extensions of both ends of the curved central portion 21 in a direction opposite to the projecting direction of the curved central portion, and base portions 23 formed by extending edges of the curved end portions 22 in substantially parallel to the direction B perpendicular to the expansion/contraction direction.

As illustrated in Fig. 23, base leg portions 235 bent outward of the expansion/contraction direction were provided at edges of the base portions 23.
In the spring unit 204, the two thin cylindrical springs 241 were arranged so that the center projecting portions 21 in their longitudinally sectional shapes were projecting in directions opposite to each other and secured to the pressure plates 304.
The pressure plates 304 were both formed in a square shape and provided with insertion holes 345 in which the base leg portions 235 are inserted.

As illustrated in Fig. 23, the base leg portions 235 were inserted in the insertion holes 345 of the pressure plates 304 and securely brazed thereto so that the pressure plates 304 and the thin cylindrical springs 241 were fixedly attached to each other.
A non-linear spring structure 104 including only the unit structure thus obtained can be directly used for various intended purposes as a pressure application means, and a non-linear spring structure 104 may be used plurally in combination.
One or a plurality of thin cylindrical springs may be arranged in the same posture adjacent to the two thin cylindrical springs 241 so that a load capacity is increased.

### EMBODIMENT 6

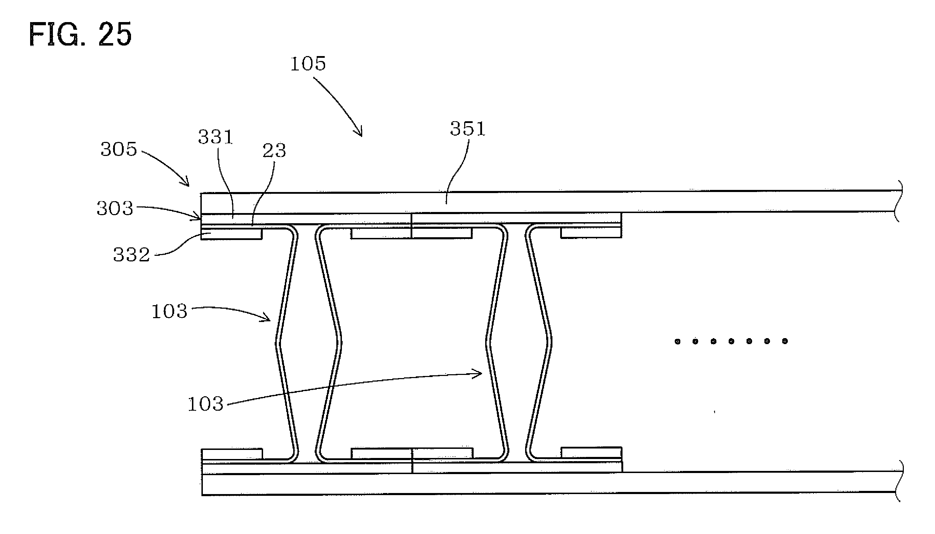

The present embodiment is directed to a pressure spacer 105 in which a plurality of the non-linear spring structures 103 according to EMBODIMENT 4 are combined.
As illustrated in Fig. 25, the pressure spacer 105 according to the present embodiment has a pair of shared pressure plates 351 having an area larger than that of the pressure plates 303 of the non-linear spring structure 103, and 16 non-linear spring structures 103 nipped and held between the pair of shared pressure plates 351. Accordingly, the pressure application plate 305 of the pressure spacer 105 has a bi-layered structure in which the shared pressure application plate 351 is laid on the pressure application plate 303 of the non-linear spring structure 103.

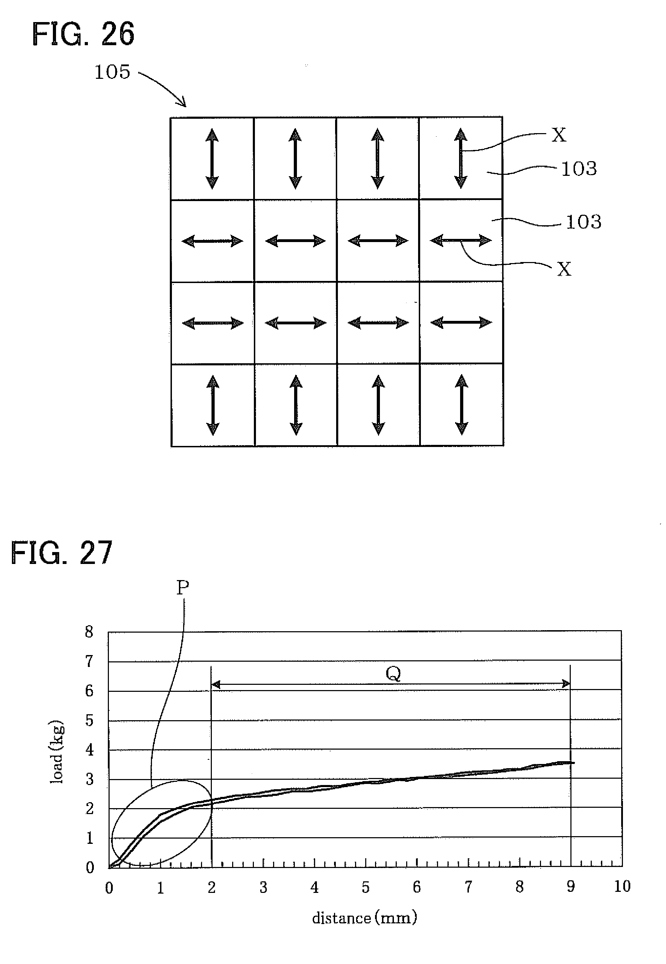

Fig. 26 illustrates arrangement directions of the non-linear spring structures 103 nipped and held between the shared pressure plates 351. Calling the longitudinal direction of a pair of thin flat springs 231 in the non-linear spring structure 103 an arrow X direction as illustrated in Fig. 22, all of the longitudinal directions X in a top row were vertically arranged, all of the longitudinal directions X in a bottom row were also vertically arranged, and all of the longitudinal directions X in two rows in the middle were laterally arranged on the drawing of Fig. 26.

The structure, in which the plurality of non-linear spring structures 103 are combined, can increase an overall load capacity. Further, the pressure spacer can achieve a better structural stability because the plurality of non-linear spring structures 103 are arranged so that all of the center projecting portions 21 are not projecting in the same direction.

The non-linear spring structures 103 may be arranged in variously different manners.
Further, in place of providing the outer plates 331 on the pressure plates 303 in each non-linear spring structure 103, the base portions 23 of the thin flat springs 231 may be directly joined with the shared pressure plates 351.

### EMBODIMENT 7

The present embodiment conducted a test on the non-linear characteristics of the non-linear spring structure 103 according to EMBODIMENT 4.
The pair of pressure plates 303 of the non-linear spring structure 103 illustrated in Fig. 22 were held by a compression test apparatus (not illustrated in the drawings) and compressed so that an overall thickness thereof was reduced. Then, a compression distance (mm) and a pressurizing force (kg) generated during the compression were measured.

Fig. 27 illustrates a measurement result. In the illustration, a lateral axis represents the distance (mm) by which the overall thickness of the non-linear spring structure 103 was compressed, and a vertical axis represents the pressurizing force generated then in terms of a load (kg). The scale marks illustrated in the drawing represent one round of compression in which the compression distance originally 0 mm is increased to 9 mm and then reduced from 9 mm to 0 mm.

It is learnt from the drawing that the non-linear characteristics were exhibited with no proportional relation between the compression distance and the load. While the compression distance (spring disposition) was 0 mm - approximately 2 mm (range P in the drawing), there was a comparatively large increase of the load relative to the compression distance. Once the compression distance exceeded 2 mm, a rate of increase of the load reduced relative to the increase of the compression distance, showing such pressure characteristics that the pressurizing force is substantially invariable regardless of the displacement.
It is also known from the drawing that the load value when the compression distance was increasing and the load value when the compression distance was decreasing in one round of compression were very close, teaching that hysteresis was hardly generated.
Therefore, it is determined from the drawing that the non-linear spring structure 103 exerts a remarkable advantage as far as the compression distance stays in the range of 2 mm - 9 mm (range of Q in the drawling).

Figs. 28 illustrate a result of observation of how the shapes of the two thin flat springs 231 of the non-linear spring structure 103 changed as the compression distance changed.
The drawings respectively illustrate shapes in the following states when the base portions 23 in a lower part of a thin flat spring 231 stay fixed; a) natural state before compression, b) a state where the compression distance is 1 mm, c) a state where the compression distance is 2 mm, d) a state where the compression distance is 3 mm, e) a state where the compression distance is 4 mm, and f) a state where the compression distance is 5 mm. The positions of the curved central portions 21 in the respective states are highlighted with black dots.

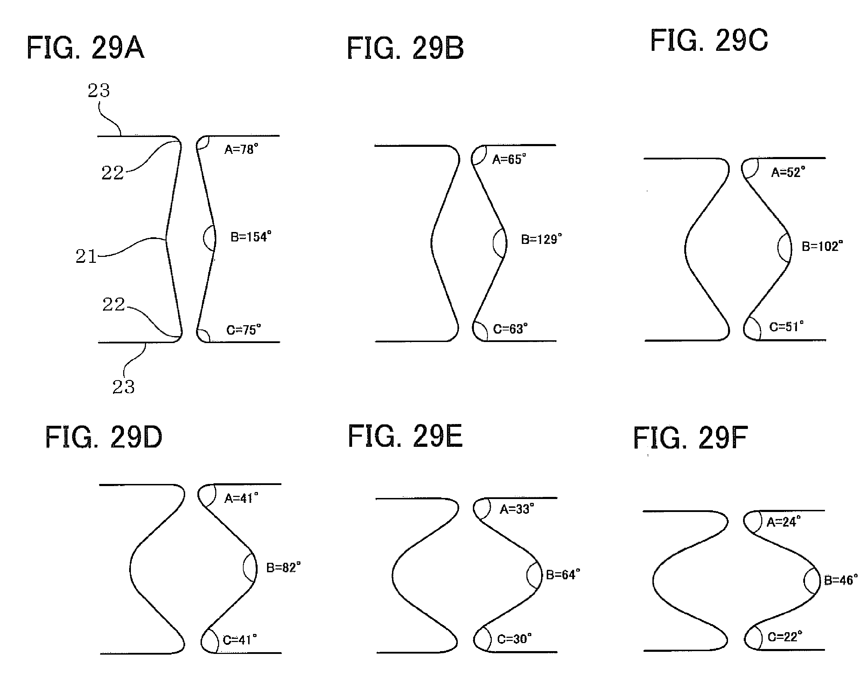

Figs. 29 separately illustrate the shapes of the thin flat spring 231 in the states a) - f). These drawings further show values of an angle B made by the extension of both ends of the curved central portion 21 and measured values of angles A and C made by the extension of both ends of the curved end portion 23. All of the angles were defined by angles made by tangents at points of inflection between the respective curved central portions 21 and the curved end portions 22.

As is learnt from Figs. 28, the non-linear spring structure 103 showed such deformation characteristics that the curved central portion 21 thereof underwent a largest disposition when the compression distance was 0 mm - 2 mm (a - c), and the disposition thereafter gradually reduced.
It is further known from Fig. 28 (b) that, as the compression distance increases, the curved end portions 22 continued to deform with their radiuses of curvature being gradually reduced, and the curved end portions 22 receded by a predetermined distance (Y) in the direction perpendicular to the expansion/contraction direction. Such a disposition in the direction perpendicular to the expansion/contraction direction may affect the non-linear characteristics.

It is learnt from Figs. 27 and 29 that the pressure spacer having the non-linear spring structure 103 exhibits remarkable non-linear characteristics as far as being compressed such that the contracted spring can retain any of the shapes in Figs. 29 c) - f).

### EMBODIMENT 8

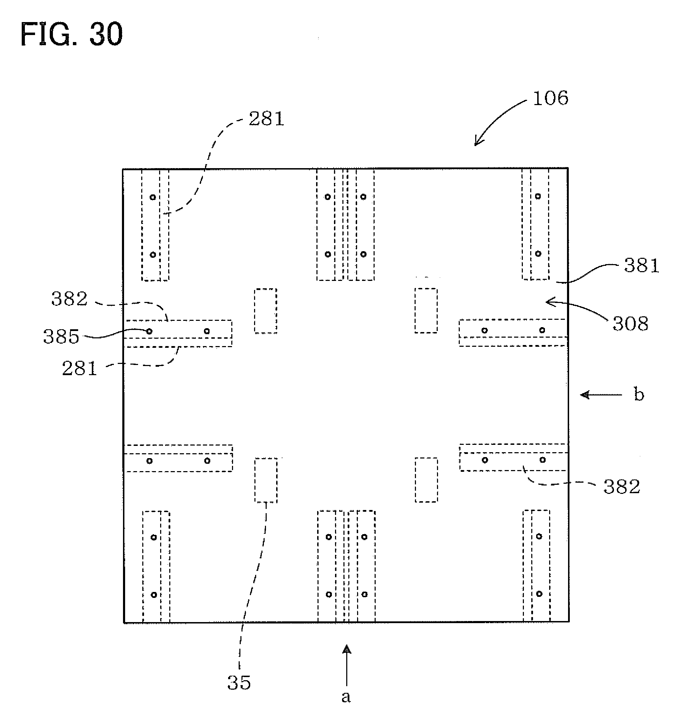

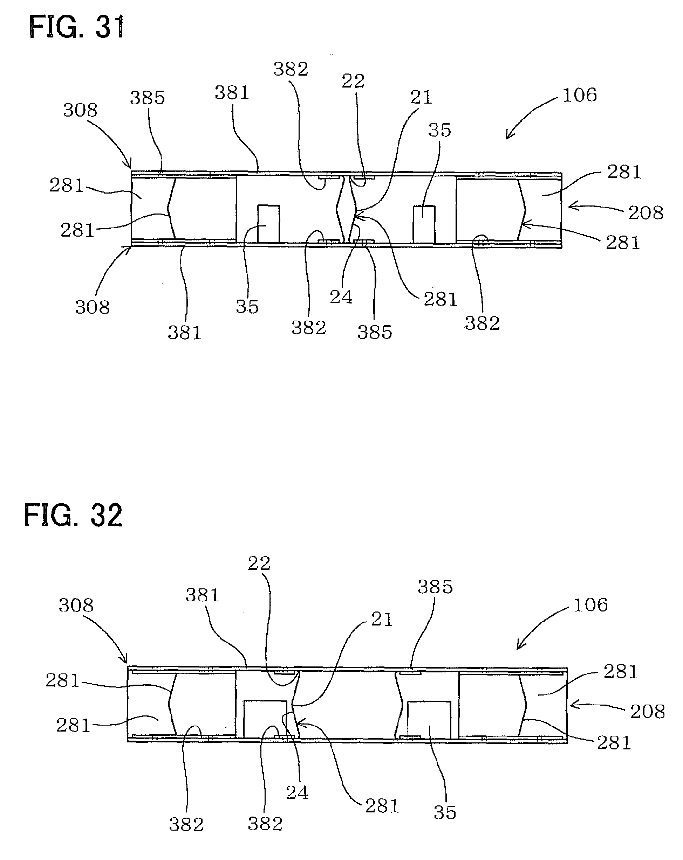

The present embodiment illustrates a different example of the pressure spacer including the non-linear spring structure as illustrated in Figs. 30 - 32.
As illustrated in the drawing, a pressure spacer 106 according to the present embodiment has a pair of pressure plates 308 and a spring unit 208 provided between the pair of pressure plates 308. The spring unit 208 according to the present embodiment includes 12 thin flat springs 281. Similarly to the thin flat spring 20 according to EMBODIMENT 1, the thin flat spring 281 has, in a longitudinally sectional shape thereof, a curved central portion 21 having a substantially arc shape projecting in a direction perpendicular to an expansion/contraction direction, a pair of curved end portions 22 each having a substantially arc shape, the pair of curved end portions 22 projecting at extensions of both ends of the curved central portion 21 in a direction opposite to the projecting direction of the curved central portion, and base portions 23 formed by extending edges of the pair of curved end portions 22 in the projecting direction of the curved central portion 21 to be in substantially parallel with the direction perpendicular to the expansion/contraction direction. Further, the thin flat spring 281 with a length in natural state has linear straight portions 24 between the curved central portion 21 and the curved end portions 22. The base portions 23 are respectively secured to the pressure plates 308 so that the thin flat spring 281 is situated between the pair of pressure plates 308.

The pressure application plate 308 has a structure where a square outer plate 381 is provided as a main plate, and rectangular inner plates 382 are provided on rear sides of the outer plate 381 to which the base portions 23 of the thin flat spring 281 are secured.
As illustrated in Fig. 30, four thin flat springs 281 were provided in vertical posture with their longitudinal directions vertically directed at upper and lower positions both, eight springs in total, and two thin flat springs 281 were provided in lateral posture with their longitudinal directions laterally directed at side positions on right and left sides both, four springs in total.

The base portions 23 of the thin flat springs 281 were nipped and held between the outer plates 381 and the inner plates 382 of the pressure plates 308. Then, the stacked structure having the outer plates 381, base portions 23, and inner plates 382 was subjected to burring caulking at two joining positions 385.
To the lower pressure application plate 308 were bonded four block members 35 each serving as a stopper so that the pair of pressure plates 308 are not too narrowly spaced from each other.

The spacer provided with less thin flat springs 281 than EMBODIMENT 1 is more suitable for any intended use which requires a pressurizing force smaller than that of EMBODIMENT 1. Because the burring caulking was employed to secure the pressure plates 308 and the thin flat springs 281, the production process was facilitated.
The present embodiment can accomplish an operational effect similar to that of EMBODIMENT 1.

### EMBODIMENT 9

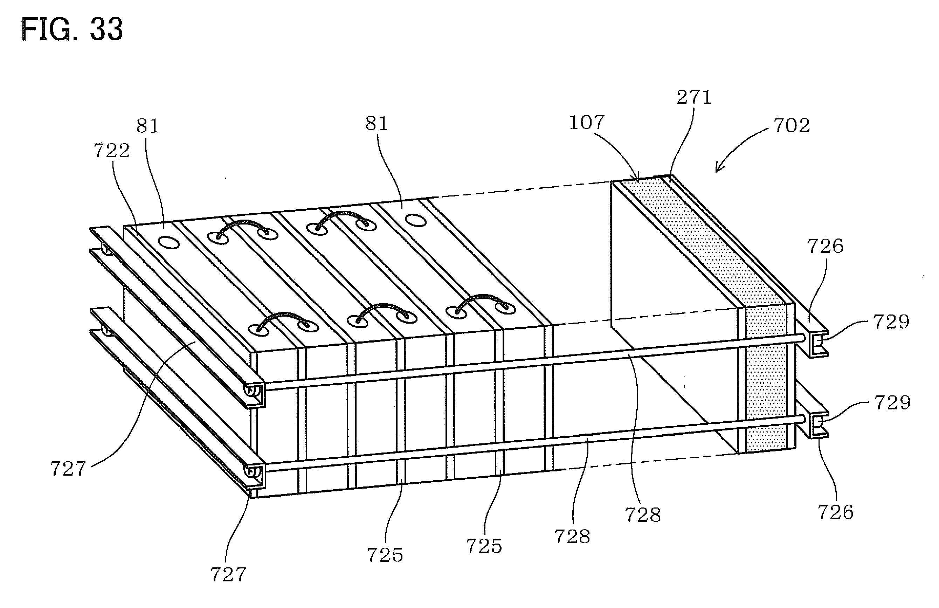

As illustrated in Fig. 33, the present embodiment is directed to a battery module 702 having a plurality of stacked battery cells 81 in which a pressure spacer 107 according to the embodiments is used.
As illustrated in the drawing, the battery module 702 according to the present embodiment has a stacked structure where the plurality of battery cells 81 are nipped and held between a pair of binders 721 and 722. And the pressure spacer 107 for applying a pressurizing force to the battery cells 81, are interposed between the pair of binders 721 and 722 together with the battery cells 81 as a member to be pressurized.

More specifically describing the structure, the battery cells 81 and cooling spacers 725 were alternately stacked between the pair of binders 721 and 722, and the pressure spacer 107 was provided at one end in a direction where these members are stacked as illustrated in the drawing. Two pairs of channel members 726 and 727 holding the pair of binders 721 and 722 therebetween were fastened with bolts 728 and nut 729 so that a pressuring force in the stacked direction was ensured.

Examples of the pressure spacer 107 are the pressure spacers 1, 102, 105, and 106 according to the embodiments 1, 3, 6, and 8, however, any other pressure spacers are usable as far as they include the non-linear spring structure according to the present invention. The pressure spacer 107 is compressed to reach a region comparable to the region Q illustrated in Fig. 27 and then set to be used.

The pressure spacer 107 used in the battery module 702 according to the present embodiment is the non-linear spring structure provided with the spring unit including the springs having the non-linear characteristics. Therefore, when the battery cells 81 are repeatedly displaced, for example, expanded and contracted, the pressure spacer 107 is still able to constantly apply a substantially invariable pressurizing force to the battery cells 81. The battery module 702 thus obtained can make each of the battery cells 81 fully exert its expected performance.

### EMBODIMENT 10

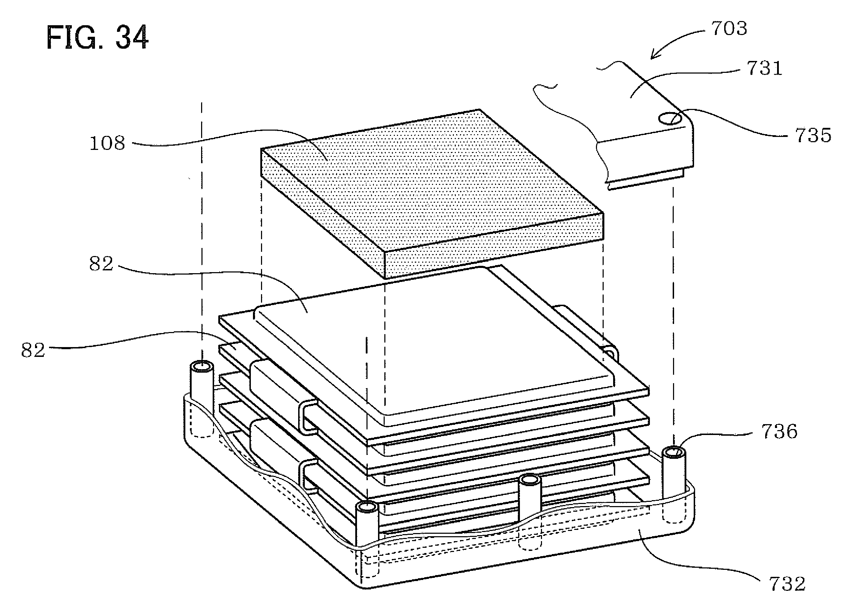

As illustrated in Fig. 34, the present embodiment is directed to a battery module 703 having a plurality of stacked battery cells 82 in which a pressure spacer 108 according to EMBODIMENTS is used.
As illustrated in the drawing, the battery module 703 according to the present embodiment has a stacked structure where the plurality of battery cells 82 are nipped and held between a pair of binders 731 and 732. And the pressure spacer 108 for applying a pressurizing force to the battery cells 82, are interposed between the pair of binders 731 and 732 together with the battery cells 82 as a member to be pressurized.

More specifically describing the structure, a stacked structure where the battery cells 82 are directly stacked is provided between the pair of binders 731 and 732, and the pressure spacer 108 was provided at one end in a direction where the cells are stacked as illustrated in the drawing. The binders 731 and 732 were secured with bolts and nuts not shown in the drawing, inserted and fastened in engaging holes 735 and 736 formed in these members.

As is the case with EMBODIMENT 9, the pressure spacers 1, 102, 105, and 106 according to EMBODIMENT s 1, 3, 6, and 8 are usable as the pressure spacer 108, and any other pressure spacers differently constructed are usable as far as they include the non-linear spring structure according to the present invention. The pressure spacer 108 is compressed to reach a region comparable to the region Q illustrated in Fig. 27 and then set to be used.

The pressure spacer 108 used in the present embodiment includes the non-linear spring structure provided with the spring unit including the springs having the non-linear characteristics. Therefore, when the battery cells 82 are repeatedly displaced, for example, expanded and contracted, the pressure spacer 108 is still able to constantly apply a substantially invariable pressurizing force to the battery cells 82.

## Claims

1. A non-linear spring structure, comprising:
a pair of pressure plates; and
a spring unit provided between the pair of pressure plates, wherein
the spring unit includes one spring or a plurality of springs,
the spring has, in a sectional shape thereof when cut along an expansion/contraction direction,
a curved central portion having a substantially arc shape projecting in a direction perpendicular to the expansion/contraction direction,
a pair of curved end portions each having a substantially arc shape, the pair of curved end portions projecting at extensions of both ends of the curved central portion in a direction opposite to the projecting direction of the curved central portion, and
base portions formed by extending edges of the pair of curved end portions in the projecting direction of the curved central portion so as to extend in substantially parallel with the direction perpendicular to the expansion/contraction direction, and
the base portions are respectively secured to the pair of pressure plates so that the spring is located between the pair of pressure plates.

2. The non-linear spring structure as claimed in Claim 1, wherein
a distance between the curved central portion and the pair of curved end portions in the spring with a length in natural state in the direction perpendicular to the expansion/contraction direction is smaller than an interval between the pair of base portions .

3. The non-linear spring structure as claimed in Claim 1 or 2, wherein
the spring with a length in natural state has a linear straight portion between the curved central portion and the curved end portions.

4. The non-linear spring structure as claimed in Claim 3, wherein
the spring with a length in unpressurized natural state has an angle formed by a pair of the straight portions with the curved central portion interposed therebetween, and the angle is an obtuse angle.

5. The non-linear spring structure as claimed in any of Claims 1 - 4, wherein the spring is made of titanium or a titanium alloy.

6. The non-linear spring structure as claimed in any of Claims 1 - 5, wherein
the spring unit has at least a unit structure in which the springs in pair are arranged so that the center projecting portions of the springs in the respective longitudinally sectional shapes are projecting in opposite directions.

7. The non-linear spring structure as claimed in any of Claims 1 - 6, wherein
the springs constituting the spring unit are arranged so that at least one of the center projecting portions in the respective longitudinally sectional shapes are projecting in a direction different to the other center projecting portions.

8. The non-linear spring structure as claimed in any of Claims 1 - 7, wherein
the spring unit has at least a group of springs arranged with such a regularity that the longitudinally sectional shapes of the springs are laid out in the same direction.

9. The non-linear spring structure as claimed in any of Claims 1 - 8, wherein
a thin flat spring is used as the spring.

10. The non-linear spring structure as claimed in any of Claims 1 - 8, wherein
a thin cylindrical spring is used as the spring.

11. A pressure spacer which is configured to be interposed between a pair of binders of a stacked structure in which one or a plurality of members to be pressurized is nipped and held between the pair of binders to generate a pressurizing force to be applied to the one or the plurality of members to be pressurized, wherein
the pressure spacer comprises a non-linear spring structure as claimed in any of Claims 1 - 10.

12. The pressure spacer as claimed in Claim 11, wherein the one or the plurality of members is a battery cell capable of charging and discharging electricity.
